# EUROPÄISCHE PATENTSCHRIFT

(11) **EP 1 246 739 B1**
(45) Veröffentlichungstag und Bekanntmachung des Hinweises auf die Patenterteilung: **11.10.2006**
(21) Anmeldenummer: 00991807.9
(22) Anmeldetag: 22.12.2000
(51) Int. Cl.: B60N 3/10

(54) **HALTEVORRICHTUNG FÜR GETRÄNKEBEHÄLTNISSE**
HOLDER DEVICE FOR DRINKS CONTAINERS
DISPOSITIF DE RETENUE POUR CONTENANTS A BOISSONS

(30) Priorität: 27.12.1999 DE 19963222
(43) Veröffentlichungstag der Anmeldung: 09.10.2002
(73) Patentinhaber: Volkswagen Aktiengesellschaft, 38436 Wolfsburg (DE)
(72) Erfinder: THILL, Albert DI, deceased (DE); BURK, Oliver, 38440 Wolfsburg (DE); HACKENBERG, Ulrich, 85139 Wettstetten (DE); JUNIGE, Bert, 38543 Hillerse (DE)
(86) Internationale Anmeldenummer: PCT/EP2000/013243
(87) Internationale Veröffentlichungsnummer: WO 2001/047748

(56) Entgegenhaltungen:
- DE-A- 4 022 193
- JP-A- 6 008 769
- JP-A- 9 030 310
- US-A- 3 842 981
- US-A- 4 955 571
- US-A- 5 060 899
- US-A- 5 330 146
- US-A- 5 489 054

## Beschreibung

Die Erfindung betrifft eine Haltevorrichtung mit einem Haltemittel, das eine Aufnahme für einen Becher, eine Tasse, eine Getränkedose oder dergleichen aufweist und an einer Konsole im Innenraum eines Kraftfahrzeugs angeordnet ist.

Derartige Vorrichtungen werden benutzt, um Insassen des Kraftfahrzeugs die sichere Ablage von Getränkebehältnissen zu ermöglichen. Aus dem US-Patent 5,813,579 ist eine zweiteilige Haltevorrichtung bekannt, bei der die beiden Teile ineinander gesteckt werden und auf einer Oberfläche einer Frontkonsole des Kraftfahrzeugs so angeordnet werden, daß eine Aufnahme auf einer Seite der Frontkonsole und eine andere Aufnahme auf der anderen Seite der Frontkonsole jeweils starr angeordnet sind. Auch gemäß einer aus dem US-Patent 4,643,342 bekannten Haltevorrichtung sind zwei Aufnahmen für Getränkebehältnisse starr auf einer Frontkonsole angeordnet.

Aus der Druckschrift JP 100 95 267 ist eine Haltevorrichtung bekannt, bei der eine Aufnahme für das Getränkebehältnis seitlich an einer Frontkonsole schwenkbar angeordnet ist.

In der Druckschrift JP 051 93 405 ist eine Haltevorrichtung mit zwei nebeneinander, jeweils für sich schwenkbaren Aufnahmen für Getränkebehältnissen offenbart. Die bekannte Haltevorrichtung ist an der Instrumententafel des Kraftfahrzeugs angeordnet. Insbesondere die Schwenkbarkeit der beiden Aufnahmen verhindert eine mögliche Kollision mit einem Schalthebel des Kraftfahrzeugs.

Den US-A-5,489,054, DE 40 22 193 A, JP 06008769 A und US-A-5,330,146 ist das Vorhandensein von zwei Haltemitteln gemeinsam, die nach Bewegen in ihre Arbeitsstellungen bezüglich einer Konsole oder dergleichen seitlich versetzt sind. Beide Haltemittel haben feste Arbeitsstellungen.

Aufgabe der vorliegenden Erfindung ist es, eine verbesserte Haltevorrichtung der eingangs beschriebenen Art zu schaffen, die den Platzkomfort für die Insassen des Kraftfahrzeugs nicht einschränkt, und einen bequemen Zugriff auf das Getränkebehältnis ermöglicht.

Diese Aufgabe wird bei einer Haltevorrichtung nach dem Oberbegriff des Anspruchs 1 erfindungsgemäß dadurch gelöst, daß das Haltemittel zwischen einer Stellung, in welcher das Haltemittel in Aufsicht wenigstens teilweise auf einer Seite der Konsole seitlich übersteht, und in eine anderen Stellung verstellbar ist, in welcher das Haltemittel in Aufsicht wenigstens teilweise auf einer anderen, der einen Seite gegenüberliegenden Seite der Konsole seitlich übersteht.

Der wesentliche Vorteil, welcher mit der Erfindung gegenüber dem Stand der Technik erreicht ist, besteht darin, daß das seitliche Überstehen des Haltemittels auf der einen oder auf der anderen Seite einen leichteren Zugriff der Insassen des Kraftfahrzeugs auf Getränkebehältnisse ermöglicht, die in der Aufnahme angeordnet sind.

Des weiteren hat die Erfindung den Vorteil, daß größere Getränkebehältnisse, die in der einen Stellung wegen des zur Verfügung stehenden, begrenzten Raums oberhalb des Haltemittels nicht in der Aufnahme anordbar sind, in der anderen Stellung in der Aufnahme anordbar sein können. Der Raum oberhalb des Haltemittels kann beispielsweise durch einen Teil der Instrumententafel des Kraftfahrzeugs gegrenzt sein.

Mit Hilfe der Verstellbarkeit des Haltemittels zwischen der einen und der anderen Stellung ist für die Insassen des Kraftfahrzeugs eine Möglichkeit geschaffen, das Haltemittel in die eine oder die andere Stellung zu bewegen, um den für die Insassen zur Verfügung stehenden Platz optimal zu nutzen.

Eine vorteilhafte Weiterbildung der Erfindung sieht vor, daß das Haltemittel zwischen der einen und der anderen Stellung entlang eines Kreisbogenabschnitts schwenkbar ist, wodurch eine Position des Haltemittels zwischen der einen und der anderen Stellung kontinuierlich verändert werden kann. Des weiteren ermöglicht die Schwenkbarkeit entlang eines Kreisbogenabschnitts gegenüber einer geradlinigen Verstellbarkeit eine verbesserte Raumausnutzung zwischen der einen und der anderen Stellung. Aufgrund der Schwenkbarkeit entlang eines Kreisbogenabschnitts wird das Haltemittel automatisch entlang des Kreisbogenabschnitts verschoben, wenn beispielsweise ein Sitz oder ein Sitzteil nach vorn verschoben wird und hierbei gegen das Haltemittel stößt. Dieses erleichtert für den Fahrer bzw. den Beifahrer die Handhabung verschiebbarer Sitze, welche insbesondere dann vorgesehen sein können, wenn für Personen der Zugang zu hinteren Sitzen ds Kraftfahrzeugs gewährleistet werden soll.

Zweckmäßig ist das Haltemittel wenigstens in der einen und/oder der anderen Stellung arretiert, wodurch ein unbeabsichtigtes Lösen des Haltemittels aus der einen oder der anderen Stellung verhindert ist.

Bei einer Ausgestaltung der Erfindung weist das Haltemittel ein Kopplungsteil auf, welches in einer an der Konsole ausgebildeten Führung verstellbar angeordnet ist, wodurch einerseits eine Befestigung des Haltemittels an der Konsole geschaffen ist.

Andererseits gewährleistet die Anordnung des Kopplungsteils in der Führung eine leichte Verstellbarkeit des Haltemittels zwischen der einen und der anderen Stellung.

Um eine ausreichende Befestigung des Haltemittels an der Konsole zu gewährleisten, kann die Führung schwalbenschwanzförmig oder T-förmig ausgebildet sein.

Bei einer zweckmäßigen Ausgestaltung der Erfindung ist das Kopplungsteil aus der Führung herausnehmbar und/oder in die Führung einsetzbar, wenn das Haltemittel in der einen oder der anderen Stellung angeordnet ist, wodurch eine leichte Entfernung bzw. eine leichte Wiedereinführung des Kopplungsteils ermöglicht ist, auch wenn das Haltemittel im Fahrzeug so angeordnet ist, das es sich in Positionen zwischen der einen und der anderen Stellung beispielsweise unterhalb einer Instrumententafel des Kraftfahrzeugs befindet.

Vorteilhaft kann vorgesehen sein, daß die Konsole als eine Frontkonsole des Kraftfahrzeugs ausgebildet ist. Die vorteilhafte Raumausnutzung und die leichte Zugänglichkeit der Aufnahme für das Getränkebehältnis wirken sich in diesem Fall besonders zweckmäßig aus, da im Bereich der Frontkonsole weitere Bedienungselemente des Kraftfahrzeugs anzubringen sind.

Die Anordnung der Haltevorrichtung auf der Frontkonsole wirkt sich dann besonders vorteilhaft aus, wenn das Haltemittel zwischen einem Frontmotorraum des Kraftfahrzeugs und einem auf der Konsole ausgebildeten Schalthebel der Konsole angeordnet ist.

Um zweckmäßig weitere Getränkebehältnisse mit Hilfe des Haltemittels in dem Kraftfahrzeugs zu halten, kann vorgesehen sein, daß das Haltemittel wenigstens eine weitere Aufnahme für einen Becher, eine Tasse, eine Getränkedose oder dergleichen umfaßt.

Eine Fortbildung der Erfindung sieht vor, daß das Haltemittel wenigstens teilweise in einer Ausnehmung an der Konsole angeordnet ist, wobei die Ausnehmung seitliche Öffnungen aufweist, so daß das Haltemittel in die eine und die andere Stellung verstellbar ist, wodurch eine vorteilhafte Integrierung des Haltemittels in die Konsole geschaffen ist

Die Integration des Haltemittels in die Konsole ist dadurch optimierbar, daß eine Deckfläche des Haltemittels und eine Deckfläche der Konsole wenigstens teilweise in einer Ebene liegen.

Zur Funktionserweiterung des Haltemittels kann bei einer zweckmäßigen Augestaltung der Erfindung vorgesehen sein, daß das Haltemittel statt einer Aufnahme für einen Becher, eine Tasse, eine Getränkedose oder dergleichen eine Aufnahme für einen Aschenbecher umfaßt.

Eine zweckmäßige Weiterbildung der Erfindung sieht vor, daß die Führung auf die Konsole aufgesetzt ist, wodurch die Haltevorrichtung auf Konsolen anordbar ist, ohne diese hinsichtlich der Konstruktion wesentlich zu verändern.

Um beim Verstellen des Haltemittels eine ruckartige Bewegung oder den Aufprall in einer Endstellung zu vermeiden, sieht eine vorteilhafte Ausgestaltung der Erfindung eine Softbremse zum Bremsen der Bewegung beim Verstellen des Haltemittels vor.

Zur Erweiterung der Möglichkeiten der Positionseinstellung des Haltemittels sieht eine zweckmäßiege Weiterbildung der Erfindung vor, daß das Haltemittel um eine Achse drehbar ist

Die Erfindung wird im Folgenden anhand von Ausführungsbeispielen unter Bezugnahme auf eine Zeichnung näher erläutert. Hierbei zeigen:
- Figur 1: eine schematische Darstellung einer Haltevorrichtung auf einer Frontkonsole in Aufsicht;
- Figur 2: die Haltevorrichtung nach Anspruch 1 in Seitenansicht mit einer schwalbenschwanzförmigen Führung;
- Figur 3: die Haltevorrichtung nach Anspruch 1 in Seitenansicht mit einer T-förmigen Führung;
- Figuren 4A, 4B, 4C: bildliche Darstellungen einer weiteren Haltevorrichtung, die an einer Frontkonsole angeordnet ist;
- Figur 5: eine perspektivische Darstellung einer Ausführungsform einer weiteren Haltevorrichtung; und
- Figur 6: eine perspektivische Darstellung einzelner Bauteile der weiteren Haltevorrichtung nach Figur 5.

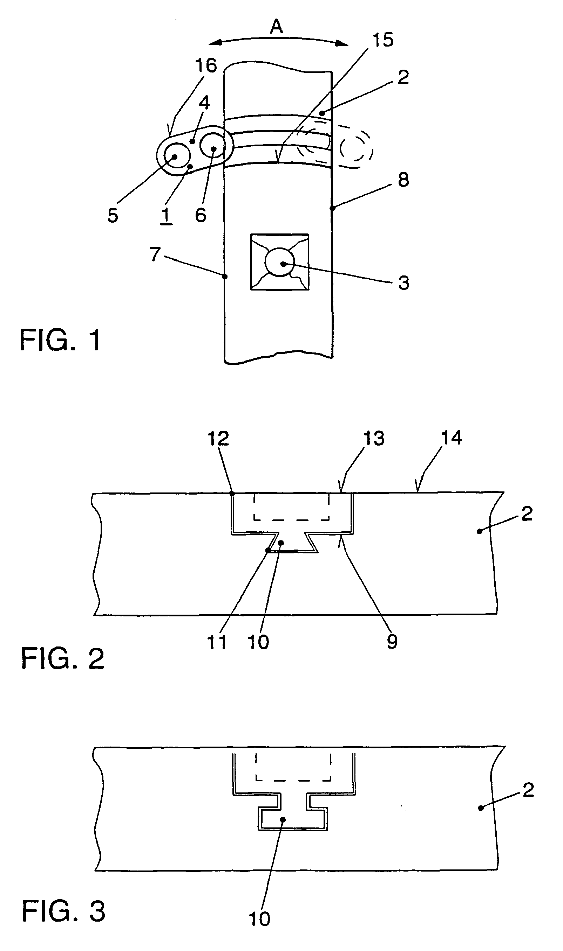

In Figur 1 ist eine Haltevorrichtung 1 dargestellt, die auf einer Frontkonsole 2 eines Kraftfahrzeugs (nicht dargestellt) angeordnet ist. Auf der Frontkonsole 2 ist weiterhin ein Schalthebel 3 angeordnet. Die Haltevorrichtung 1 umfaßt ein Haltemittel 4 mit einer Aufnahme 5 und einer weiteren Aufnahme 6.

Gemäß Figur 1 kann das Haltemittel 4 in einer Stellung angeordnet sein, in welcher es in Aufsicht auf einer Seite 7 der Frontkonsole 2 seitlich übersteht. Das Haltemittel 4 kann, dies ist mittels gestrichelten Linien in Figur 1 dargestellt, in einer anderen Stellung angeordnet werden, in welcher das Haltemittel 4 in Aufsicht auf einer anderen Seite 8 der Frontkonsole 2 seitlich übersteht. Die Stellung des Halemittels 4 ist zwischen der einen und der anderen Stellung stufenlos verstellbar.

Wie in Figur 1 dargestellt, steht das Haltemittel 4 in Aufsicht auf der anderen Seite 8 der Frontkonsole 2 seitlich nicht über, wenn das Haltemittel 4 in der einen Stellung angeordnet ist. Wenn das Haltemittel 4 in der anderen Stellung angeordnet ist, steht das Haltemittel 4 in Aufsicht auf der einen Seite 7 der Frontkonsole 2 seitlich nicht über. Hierdurch ist ein verbesserter Platzkomfort für die Fahrzeuginsassen ermöglicht.

Es kann vorgesehen sein, daß das Haltemittel in der einen und/oder der anderen Stellung und/oder in Positionen zwischen der einen und der anderen Stellung arretierbar ist.

Gemäß Figur 1 wird das Haltemittel 4 bei einer Bewegung zwischen der einen und der anderen Stellung entlang eines Kreisbogenabschnitts (Pfeil A) bewegt. Zweckmäßig sieht eine andere Ausführungsform der Erfindung vor, daß das Haltemittel 4 zwischen der einen und der anderen Stellung entlang einer Geraden bewegt wird (nicht dargestellt).

In Figur 2 ist die Frontkonsole 2 in Seitenansicht dargestellt. Das Haltemittel 4 weist an einer Unterseite 9 ein Kopplungsteil 10 auf. Das Kopplungsteil ist gemäß Figur 2 schwalbenschwanzförmig ausgebildet und in einer ebenfalls schwalbenschwanzförmig ausgebildeten Führung 11 angeordnet. Die Führung 11 erstreckt sich vorzugsweise über die gesamte Breite der Frontkonsole.

Gemäß Figur 2 ist das Haltemittel 4 in einer Ausnehmung 12 in der Konsole 2 montiert, wobei eine Deckfläche 13 des Haltemittels 4 und eine Deckfläche 14 der Frontkonsole 2 in einer Ebene angeordnet sind.

Gemäß Figur 3 können das Kopplungsteil 10 und die Führung 11 T-förmig ausgebildet sein.

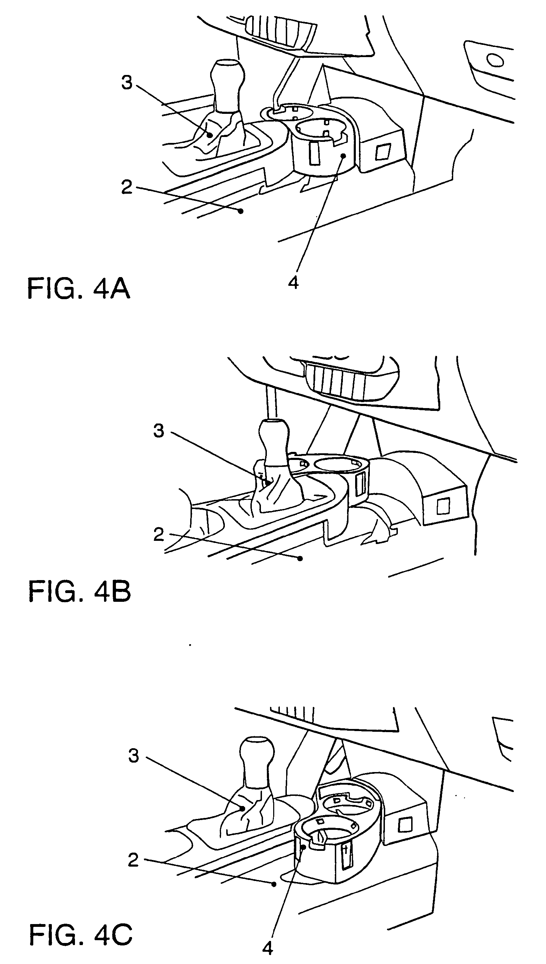

Die Figuren 4A, 4B, 4C zeigen bildliche Darstellungen einer weiteren Ausführungsform einer Haltevorrichtung 1. Die Haltevorrichtung 1 ist wiederum auf einer Frontkonsole 2 montiert, und entlang eines Kreisbogenabschnitts verstellbar angeordnet. Gemäß den Figuren 4A, 4B, 4C und 1 weist das Haltemittel 4 in Aufsicht eine gekrümmte äußere Form auf, wobei Seitenflächen 15 der Ausnehmung 12 im wesentlichen parallel zu Seitenflächen 16 des Haltemittles 4 verlaufen (vgl. Figur 1).

Die eine oder die andere Aufnahme 5, 6 kann als ein Aschenbecher ausgebildet sein. Es kann vorgesehen sein, daß Haltevorrichtung 1 oberhalb der Frontkonsole 2 angeordnet ist, wobei die Führung 11 in diesem Fall vorzugsweise auf die Deckfläche 14 der Frontkonsole 2 aufgesetzt ist (nicht dargestellt). Diese Ausführungsform erleichtert es, das Kopplungsteil 10 und die Führung 11 unterhalb des Haltemittels 4 so anzuordnen, daß das Kopplungsteil 10 und die Führung 11 in jeder beliebigen Stellung des Haltemittels 4 wenigstens in Draufsicht für einen Benutzer des Kraftfahrzeugs nicht sichtbar angeordnet sind. Wenn das Kopplungsteil 10 die auf der Frontkonsole 2 angeordnete Führung 11 bei dieser Ausführungsform teilweise umgreift (nicht dargestellt), ist die Führung 11 für den Benutzer überhaupt nicht sichtbar.

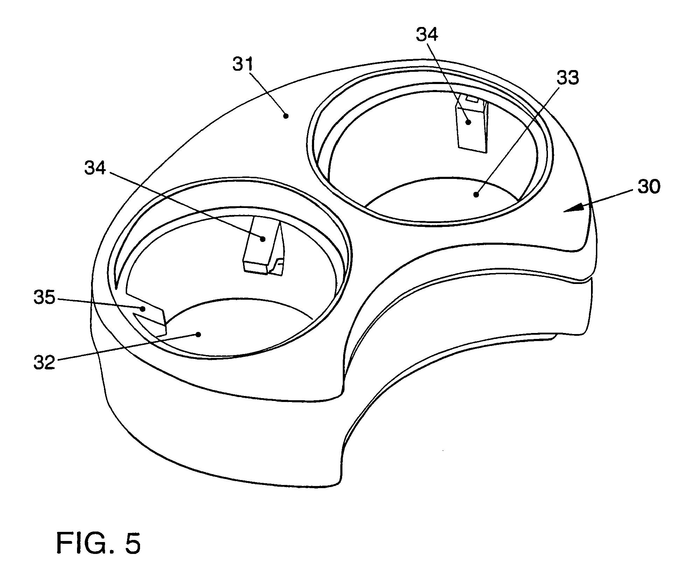

In Figur 5 ist eine perspektivische Darstellung einer weiteren Haltevorrichtung 30. Die weitere Haltevorrichtung 30 weist ein Haltemittel 31 mit zwei Bechereinsätzen 32, 33 für jeweils einen Getränkebehälter auf, wobei der Getränkebehälter nach dem Einführen mit Hilfe jeweiliger federnder Haltearme 34, 35 in den Bechereinsätzen 32, 33 gesichert ist.

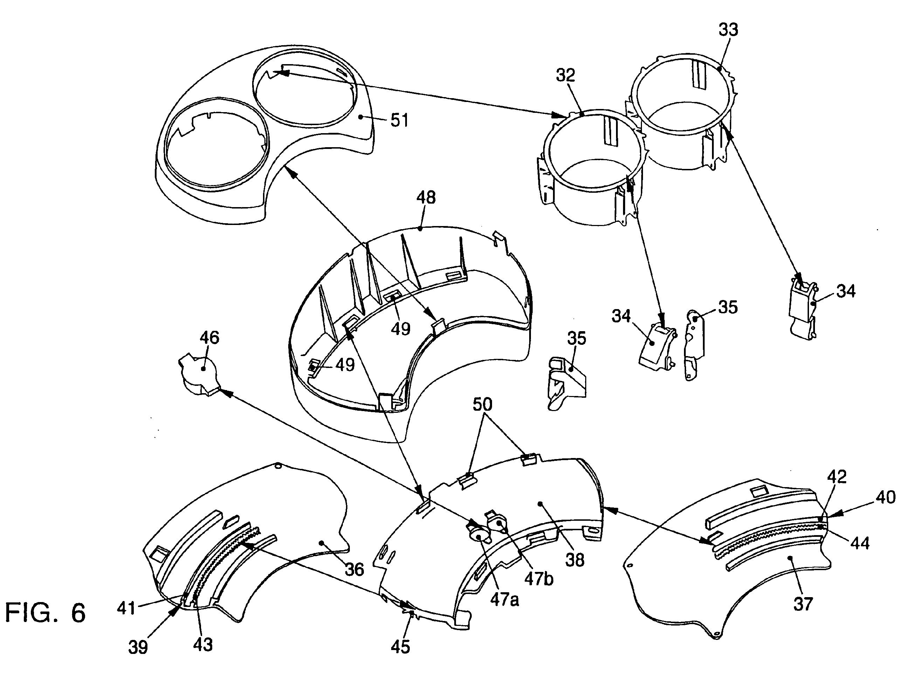

In Figur 6 sind einzelne Bauteile der weiteren Haltevorrichtung 30 perspektivisch dargestellt. Beim Einbau der weiteren Haltevorrichtung 30 in einem Fahrzeug wird eine Führungskonsole im Fahrzeuginnenraum befestigt. In Figur 6 sind eine Führungskonsole 36 und eine andere Führungskonsole 37 dargestellt, die für eine Schwenkbarkeit eines auf der jeweiligen Führungskonsole 36 oder 37 zu montierenden Führungsunterteils 38 nach links bzw. nach rechts eine jeweilige Konsolenführung 39 bzw. 40 aufweisen. Die Konsolenführung 39 bzw. 40 ist jeweils nur in einem hälftigen Teilabschnitt der Führungskonsole 36 bzw. 37 ausgebildet und umfaßt einen Vorsprung 41 bzw. 42 und einen gezackten Vorsprung 43 bzw. 44. Mittels des Zusammenwirkens des Vorsprungs 41 bzw. 42 und des gezackten Vorsprungs 43 bzw. 44 mit einer Führung 45 am Führungsunterteil 38 wird die Führung des Haltemittels 31 beim Schwenken gewährleistet.

Ein Montagebauteil 46, das bei der Montage des Führungsunterteils 38 auf der Führungskonsole 36 bzw. 37 teilweise in eine Öffnung 47a oder 47b eingeführt wird, umfaßt ein Zahnrad (nicht dargestellt), welches mit dem jeweiligen gezackten Vorsprung 43 bzw. 44 Führungskonsole 36 bzw. 37 zusammenwirkt und ebenfalls zur Führung des Führungsunterteils 38 auf der Führungskonsole 36 bzw. 37 beiträgt. Eine Drehung des Zahnrads beim Verstellen bzw. Schwenken des Haltemittels 31 wird hierbei dadurch abgebremst, daß das Zahnrad teilweise in einem Medium, insbesondere Öl angeordnet ist, wodurch eine sogenannte Softbremse gebildet ist.

Auf das Führungsunterteil 38 wird ein Unterteil 48 aufgesetzt, welches mittels Schnappverschlüssen befestigt wird, die von zusätzlichen, in Ausnehmungen 49 eingreifenden Vorsprüngen 50 gebildet werden. Des weiteren werden die Bechereinsätze 32, 33 mit den zugehörigen Haltearmen 34, 35 montiert. Abschließend wird ein Oberteil 51 aufgesetzt und befestigt.

### BEZUGSZEICHENLISTE

- 1: Haltevorrichtung
- 2: Frontkonsole
- 3: Schalthebel
- 4: Haltemittel
- 5: Aufnahme
- 6: weiter Aufnahme
- 7: eine Seite der Frontkonsole 2
- 8: andere Seite der Frontkonsole 2
- 9: Unterseite des Haltemittels 4
- 10: Kopplungsteil
- 11: Führung
- 12: Ausnehmumg
- 13: Deckfläche des Haltemittels 4
- 14: Deckfläche der Frontkonsole 2
- 15: Seitenflächen des Haltemittels 4
- 16: Seitenflächen der Ausnehmung 12
- 30: weitere Haltevorrichtung
- 31: Haltemittel
- 32,33: Bechereinsetzer
- 34,35: federnde Haltearme
- 36,37: Führungskonsole
- 38: Führungsunterteil
- 39,40: Konsolenführung
- 41,42: Vorsprung
- 43,44: gezackter Vorsprung
- 45: Führung
- 46: Montagebauteil
- 47a,47b: Öffnungen
- 48: Unterteil
- 49: Ausnehmung
- 50: Vorsprung
- 51: Oberteil

## Patentansprüche

1. Haltevorrichtung (1) mit einem Haltemittel (4), das eine Aufnahme (5) für einen Becher, eine Tasse, eine Getränkedose oder dergleichen aufweist und an einer Konsole (2) im Innenraum eines Kraftfahrzeugs angeordnet ist wobei das Haltemittel (4) zwischen einer Stellung, in welcher das Haltemittel (4) in Aufsicht wenigstens teilweise auf einer Seite (7) der Konsole (2) seitlich übersteht, und einer anderen Stellung verstellbar ist, **dadurch gekennzeichnet, daß** das Haltemittel (4) in der anderen Stellung in Aufsicht wenigstens teilweise auf einer anderen, der einen Seite (7) gegenüberliegenden Seite (8) der Konsole (2) seitlich übersteht.

2. Haltevorrichtung (1) nach Anspruch 1, **dadurch gekennzeichnet, daß** das Haltemittel (4) zwischen der einen und der anderen Stellung entlang eines Kreisbogenabschnitts schwenkbar ist.

3. Haltevorrichtung (1) nach Anspruch 1 oder 2, **dadurch gekennzeichnet, daß** das Haltemittel (4) wenigstens in der einen und/oder der anderen Stellung arretiert ist.

4. Haltevorrichtung (1) nach einem der vorhergehenden Ansprüche, **dadurch gekennzeichnet, daß** das Haltemittel (4) ein Kopplungsteil (10) aufweist, welches in einer an der Konsole (2) ausgebildeten Führung (11) verstellbar angeordnet ist.

5. Haltevorrichtung (1) nach Anspruch 4, **dadurch gekennzeichnet, daß** die Führung (11) schwalbenschwanzförmig ausgebildet ist.

6. Haltevorrichtung (1) nach Anspruch 4, **dadurch gekennzeichnet, daß** die Führung (11) T-förmig ausgebildet ist.

7. Haltevorrichtung (1) nach einem der Ansprüche 4 bis 6, **dadurch gekennzeichnet, daß** das Kopplungsteil (10) aus der Führung (11) herausnehmbar und/oder in die Führung (11) einsetzbar ist, wenn das Haltemittel (4) in der einen oder der anderen Stellung angeordnet ist.

8. Haltevorrichtung (1) nach einem der vorhergehenden Ansprüche, **dadurch gekennzeichnet, daß** die Konsole (2) als eine Frontkonsole des Kraftfahrzeugs ausgebildet ist.

9. Haltevorrichtung (1) nach Anspruch 8, **dadurch gekennzeichnet, daß** das Haltemittel (4) zwischen einem Frontmotorraum des Kraftfahrzeugs und einem auf der Konsole (2) ausgebildeten Schalthebel (3) an der Konsole (2) angeordnet ist.

10. Haltevorrichtung (1) nach einem der vorhergehenden Ansprüche, **dadurch gekennzeichnet, daß** das Haltemittel (4) wenigstens eine weitere Aufnahme (6) für einen Becher, eine Tasse, eine Getränkedose oder dergleichen umfaßt.

11. Haltevorrichtung (1) nach einem der vorhergehenden Ansprüche, **dadurch gekennzeichnet, daß** das Haltemittel wenigstens teilweise in einer Ausnehmung an der Konsole angeordnet ist, wobei die Ausnehmung seitliche Öffnungen aufweist, so daß das Haltemittel in die eine und die andere Stellung verstellbar ist.

12. Haltevorrichtung (1) nach Anspruch 11, **dadurch gekennzeichnet, daß** eine Deckfläche (13) des Haltemittels (4) und eine Deckfläche (14) der Konsole (2) wenigstens teilweise in einer Ebene liegen.

13. Haltevorrichtung (1) nach einem der vorhergehenden Ansprüche, **dadurch gekennzeichnet, daß** das Haltemittel (4) statt einer Aufnahme (5) für einen Becher, eine Tasse, eine Getränkedose oder dergleichen eine Aufnahme für einen Aschenbecher umfaßt.

14. Haltevorrichtung (1) nach einem der Ansprüche 4 bis 13, **dadurch gekennzeichnet, daß** das die Führung (11) auf die Konsole (2) aufgesetzt ist.

15. Haltevorrichtung (30) nach einem der vorhergehenden Ansprüche, **gekennzeichnet durch** eine Softbremse (46) zum Bremsen der Bewegung beim Verstellen des Haltemittels (31).

16. Haltevorrichtung (1) nach einem der vorhergehenden Ansprüche, **dadurch gekennzeichnet, daß** das Haltemittel (4) um eine Achse drehbar ist.

## Claims

1. Holder device (1) comprising a holder section (4), which has a receptacle (5) for a mug, a cup, a drinks can or the like and is arranged on a console (2) in the interior of a motor vehicle, the holder section (4) being adjustable between a position in which the holder section (4), in top plan view, protrudes laterally at least partially over one side (7) of the console (2), and another position, **characterized in that** the holder section (4) in the other position in top plan view protrudes at least partially on another side (8) of the console (2) opposite the one side (7).

2. Holder device (1) according to Claim 1, **characterized in that** the holder section (4) can be pivoted between the one position and the other position over a sector of a circular arc.

3. Holder device (1) according to Claim 1 or 2, **characterized in that** the holder section (4) is arrested at least in the one and/or the other position.

4. Holder device (1) according to any one of the preceding Claims, **characterized in that** the holder section (4) has a coupling part (10), which is adjustably arranged in a guide (11) formed on the console (2).

5. Holder device (1) according to Claim 4, **characterized in that** the guide (11) is of dovetail-shaped design.

6. Holder device (1) according to Claim 4, **characterized in that** the guide (11) is of T-shaped design.

7. Holder device (1) according to any one of Claims 4 to 6, **characterized in that** the coupling part (10) can be drawn out of the guide (11) and/or inserted into the guide (11), when the holder section (4) is arranged in the one or the other position.

8. Holder device (1) according to any one of the preceding Claims, **characterized in that** the console (2) takes the form of a front console of the motor vehicle.

9. Holder device (1) according to Claim 8, **characterized in that** the holder section (4) is arranged on the console (2) between a front engine compartment of the motor vehicle and a gearshift lever (3) arranged on the console (2).

10. Holder device (1) according to any one of the preceding Claims, **characterized in that** the holder section (4) comprises at last one further receptacle (6) for a mug, a cup, a drinks can or the like.

11. Holder device (1) according to any one of the preceding Claims, **characterized in that** the holder section is arranged at least partially in a recess on the console, the recess having lateral openings, so that the holder section can be shifted into the one or the other position.

12. Holder device (1) according to Claim 11, **characterized in that** a top surface (13) of the holder section (4) and a top surface (14) of the console (2) lie at least partially in one plane.

13. Holder device (1) according to any one of the preceding Claims, **characterized in that** the holder section (4), instead of a receptacle (5) for a mug, a cup, a drinks can or the like, comprises a receptacle for an ashtray.

14. Holder device (1) according to any one of Claims 4 to 13, **characterized in that** the guide (11) is mounted onto the console (2).

15. Holder device (30) according to any one of the preceding Claims, **characterized by** a soft brake (46) for braking the movement when adjusting the holder section (31).

16. Holder device (1) according to any one of the preceding Claims, **characterized in that** the holder section (4) is rotatable about an axis.

## Revendications

1. Dispositif de retenue (1) avec un moyen de retenue (4) qui présente un logement (5) pour un gobelet, une tasse, une cannette ou autre et qui est disposé sur une console (2) dans l'habitacle d'un véhicule automobile, où le moyen de retenue (4) peut être déplacé entre une position dans laquelle le moyen de retenue (4), vu en plan, déborde latéralement au moins partiellement sur un côté (7) de la console (2) et une autre position, **caractérisé en ce que** le moyen de retenue (4), vu en plan dans l'autre position, déborde latéralement au moins partiellement sur un autre côté (8) de la console (2) se trouvant à l'opposé du premier côté (7).

2. Dispositif de retenue (1) selon la revendication 1, **caractérisé en ce que** le moyen de retenue (4) peut pivoter entre l'une et l'autre des positions le long d'une section d'arc de cercle.

3. Dispositif de retenue (1) selon la revendication 1 ou 2, **caractérisé en ce que** le moyen de retenue (4) est bloqué au moins dans l'une et/ou dans l'autre des positions.

4. Dispositif de retenue (1) selon l'une quelconque des revendications précédentes, **caractérisé en ce que** le moyen de retenue (4) présente une pièce d'accouplement (10), laquelle est disposée de manière mobile dans une glissière (11) pratiquée dans la console (2).

5. Dispositif de retenue (1) selon la revendication 4, **caractérisé en ce que** la glissière (11) est réalisée en queue d'aronde.

6. Dispositif de retenue (1) selon la revendication 4, **caractérisé en ce que** la glissière (11) est réalisée en forme de T.

7. Dispositif de retenue (1) selon l'une quelconque des revendications 4 à 6, **caractérisé en ce que** la pièce d'accouplement (10) est amovible de la glissière (11) et/ou peut être placée dans la glissière (11), quand le moyen de retenue (4) est disposé dans l'une et/ou dans l'autre des positions.

8. Dispositif de retenue (1) selon l'une quelconque des revendications précédentes, **caractérisé en ce que** la console (2) est réalisée en tant que console avant du véhicule automobile.

9. Dispositif de retenue (1) selon la revendication 8, **caractérisé en ce que** le moyen de retenue (4) est disposé sur la console (2) entre un compartiment moteur avant du véhicule automobile et un levier de changement de vitesses (3) placé sur la console (2).

10. Dispositif de retenue (1) selon l'une quelconque des revendications précédentes, **caractérisé en ce que** le moyen de retenue (4) comprend au moins un autre logement (6) pour un gobelet, une tasse, une canette ou autre.

11. Dispositif de retenue (1) selon l'une quelconque des revendications précédentes, **caractérisé en ce que** le moyen de retenue (4) est disposé au moins partiellement dans un logement de la console, le logement présentant des ouvertures latérales de sorte que le moyen de retenue puisse être déplacé dans l' une ou l'autre position.

12. Dispositif de retenue (1) selon la revendication 11, **caractérisé en ce qu'**une surface de recouvrement (13) du moyen de retenue (4) se situe au moins partiellement dans le même plan qu'une surface de recouvrement (14) de la console (2).

13. Dispositif de retenue (1) selon l'une quelconque des revendications précédentes, **caractérisé en ce que** le moyen de retenue (4) comprend, au lieu d'un logement (5) pour un gobelet, une tasse, une canette ou autre, un logement pour un cendrier.

14. Dispositif de retenue (1) selon l'une quelconque des revendications 4 à 13, **caractérisée en ce que** la glissière (11) est placée sur la console (2).

15. Dispositif de retenue (30) selon l'une quelconque des revendications précédentes, **caractérisé par** un frein progressif (46) servant à freiner le mouvement lors du déplacement du moyen de retenue (31).

16. Dispositif de retenue (1) selon l'une quelconque des revendications précédentes, **caractérisé en ce que** le moyen de retenue (4) peut pivoter autour d'un axe.
